# FASCICULE DE BREVET EUROPEEN

(11) **EP 1 767 109 B1**
(45) Date de publication et mention de la délivrance du brevet: **28.10.2009**
(21) Numéro de dépôt: 06014195.9
(22) Date de dépôt: 08.07.2006
(51) Int. Cl.: A41D 27/24

(54) **Procédé d'assemblage de panneaux textiles et produits obtenus à l'aide de ce procédé**
Verfahren zur Verbindung von Textilen Flächen
Method for assembling textile panels and products obtained

(30) Priorité: 26.07.2005 FR 0508010
(43) Date de publication de la demande: 28.03.2007
(73) Titulaire: SALOMON S.A.S., 74370 Metz-Tessy (FR)
(72) Inventeur: Chapuis, Serge, 73610 Lepin Le Lac (FR)
(74) Mandataire: Rambaud, Pascal

(56) Documents cités:
- EP-A- 1 491 105
- FR-A- 2 828 998

## Description

L'invention concerne un procédé d'assemblage de panneaux textile laminés et les produits obtenus à l'aide de ce procédé.

Cette invention concerne en particulier le domaine des vêtements ou articles d'habillement et/ou sacs.

Elle concerne plus particulièrement le domaine des vêtements de sport, sacs de sport et/ou des vêtements étanches et/ou résistants à l'eau.

Il est bien connu dans l'industrie du vêtement d'utiliser des matériaux revêtus d'une enduction étanche ou des laminés pour obtenir des vêtements étanches. Le document EP1491105 illustre l'utilisation de tels panneaux laminés ainsi qu'un procédé de soudure des panneaux.

L'enduction peut être soit externe (exemple du ciré), soit effectuée sur la face interne du vêtement, il s'agit alors généralement d'une enduction PU ou PVC.

Les laminés sont des matières composites réunissant plusieurs couches contrecollées ensemble, l'une d'entre elles étant généralement constituée par une membrane imperméable et/ou respiro-étanche et/ou coupe-vent. Ces membranes peuvent être en PTFE, PU....

Des exemples typiques de tels laminés sont ceux munis d'une membrane dite "respiro-étanche", c'est-à-dire étanche à l'eau mais perméable à la vapeur d'eau et vendues sous la dénomination commerciale Gore Tex ®, Sympatex®. Ces laminés peuvent être constitués de deux ou trois couches, selon que le laminé doit être intégré dans le vêtement avec d'autres couches, ou utilisé tel quel comme dans le cas du laminé trois couches, désigné usuellement par le terme "three-ply", la membrane étant interposée entre un tissu de doublure interne et un tissu d'enveloppe externe

Dans le cadre de la présente description le terme matériau laminé sera utilisé pour désigner à la fois les textiles enduits (intérieurement ou extérieurement) et les matériaux textiles laminés munis d'un film ou membrane faisant office de barrière coupe-vent, étanche ou résistant à l'eau ... etc. On désignera également par "couche de protection" "couche fonctionnelle", "membrane", "traitement" ou "enduction" toute membrane ou enduction qui constitue au minimum une barrière à la pénétration d'eau ou autre liquide.

Généralement les vêtements sont constitués de pièces ou panneaux de ces laminés, ceux-ci étant assemblés par des coutures.

Pour des vêtements qui, au final, doivent être étanches les coutures doivent ensuite être rendues étanches, généralement par l'application d'un ruban d'étanchéité muni d'un adhésif thermofusible.

Pour des raisons pratiques et esthétiques, l'étanchage des coutures est généralement effectué à l'intérieur du vêtement.

Le collage des rubans d'étanchéité pose toutefois des problèmes, notamment en fonction de matériau constituant la première couche du laminé (ou couche de doublure), ceci surtout pour des laminés trois couches tels que décrits ci-avant.

Ainsi le US 2005/0081281 explique qu'en fonction de la nature de la couche de doublure, le collage peut être insuffisant pour une bonne étanchéité de la couture et que pour résoudre ce problème les matériaux constituant les doublures sont généralement des jerseys simples, à structure ouverte de type mono filament, ce qui réduit le choix de matériau disponible pour de telles doublures. Des colles basse viscosité ou liquides ont également été développées pour résoudre ce problème et permettre aux colles de pénétrer à l'intérieur de structures plus complexes (cf. US 6 387 994 et WO 01/26495).

Le problème de collage se pose également en ce qui concerne les matériaux traités déperlants (water repellent) et/ou antitaches (stain repellent), ce qui est notamment le cas des matériaux revêtus d'une enduction telle que connue sous la dénomination commerciale Scotchguard®, ou Teflon®, à savoir une enduction à base de fluor, Teflon ou autre. De tels traitements déperlants sont également appelés traitements déperlants durables ou "DWR" (durable water repellent). Par la suite le terme traitement déperlant désignera tout traitement déperlant et/ou antitaches et/ou DWR.

Pour résoudre ces problèmes le US 2005/0022920 précité propose d'enlever ou araser (par rabotage, meulage, abrasion, coupe....) une partie du matériau textile de la doublure sur au moins une partie de la zone de couture à étancher, le ruban d'étanchage étant ensuite appliqué sur toute cette zone.

Une telle opération de parage ou d'arasage est très compliquée et délicate à effectuer, il ne faut en effet pas endommager la membrane située en dessous de la couche arasée. Il faut par ailleurs enlever une quantité de textile suffisante pour atteindre le but souhaité. Par ailleurs les épaisseurs de couches textiles peuvent varier, de façon plus ou moins importante, notamment s'il s'agit de matériau de type polaire et le réglage de la machine procédant au parage est donc très délicat et compliqué à réaliser.

Un but de la présente invention est de remédier à ces inconvénients et de proposer un nouveau concept d'assemblage et d'étanchage de coutures notamment d'un vêtement ou sac.

Un autre but de l'invention est de proposer un concept d'assemblage de matériaux textiles permettant une nouvelle esthétique.

Ce but ou ces buts sont atteints par le procédé d'assemblage de panneaux textiles laminés selon l'invention qui comprend les étapes consistant à :
- fournir au moins deux panneaux laminés, chaque panneau laminé comprenant au moins une couche de protection résistante à l'eau fixée sur le matériau textile,
- à assembler les deux panneaux selon une ligne d'assemblage déterminée,
- à mettre à plat les deux panneaux laminés,
- à pré positionner par collage un ruban d'étanchéité muni d'un adhésif sur la ligne d'assemblage,
- à soumettre la ligne d'assemblage à une température θ1 supérieure à la température de fusion de l'adhésif, sous une pression P déterminée pendant une durée T déterminée, de façon à faire fluer au moins une partie de l'adhésif dans les interstices des fibres du matériau textile,
- à soumettre, à l'issue de la durée T, la ligne d'assemblage à un refroidissement accéléré par pressage à froid de façon à figer et solidifier l'adhésif

Un tel procédé permet en effet de garantir un parfait fluage de l'adhésif dans les interstices entre les fibres du matériau textile et de mouiller ainsi les dites fibres, même si celui-ci est traité, et donc de garantir l'étanchéité souhaitée, ainsi que de garantir par le refroidissement accéléré l'absence de retrait ou de décollement de l'adhésif et donc de garantir l'étanchéité.

De toute façon l'invention sera mieux comprise et d'autres caractéristiques de celle-ci seront mises en évidence à l'aide de la description qui suit en référence au dessin schématique annexé dans lequel :
- la figure 1 est une vue schématique illustrant une première phase du procédé d'assemblage,
- la figure 2 est une vue schématique illustrant une seconde phase du procédé d'assemblage,
- la figure 3 est une vue schématique illustrant une troisième phase du procédé d'assemblage,
- la figure 4 est une vue schématique illustrant le première étape de pose du ruban d'étanchéité,
- la figure 5 est une vue schématique illustrant l'étape de fluage du matériau adhésif du raban d'étanchéité,
- la figure 6 est une vue schématique illustrant l'étape de refroidissement du ruban adhésif,

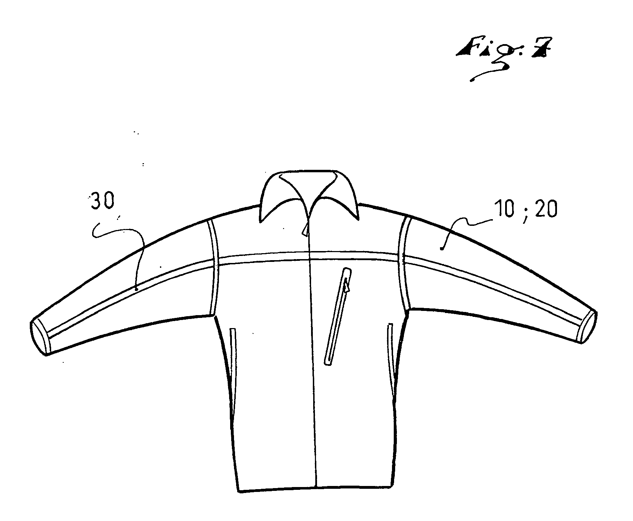

- la figure 7 est une vue d'un vêtement assemblé à l'aide du procédé selon l'invention.

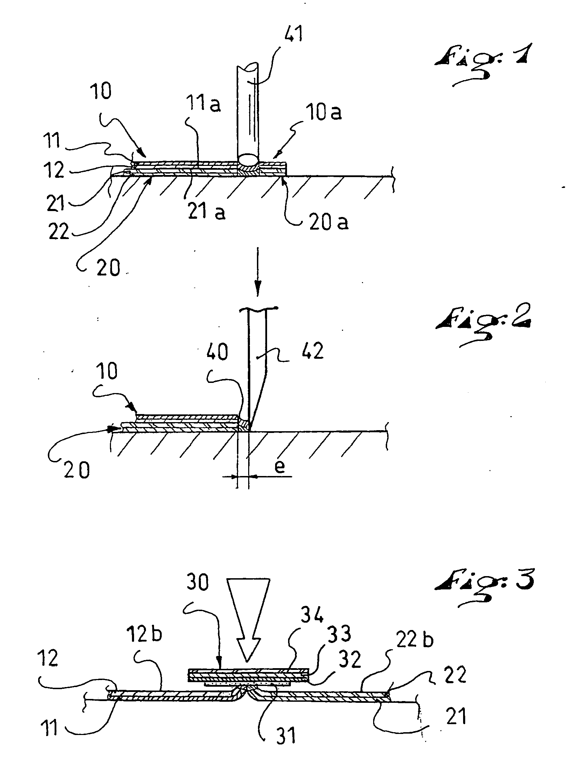

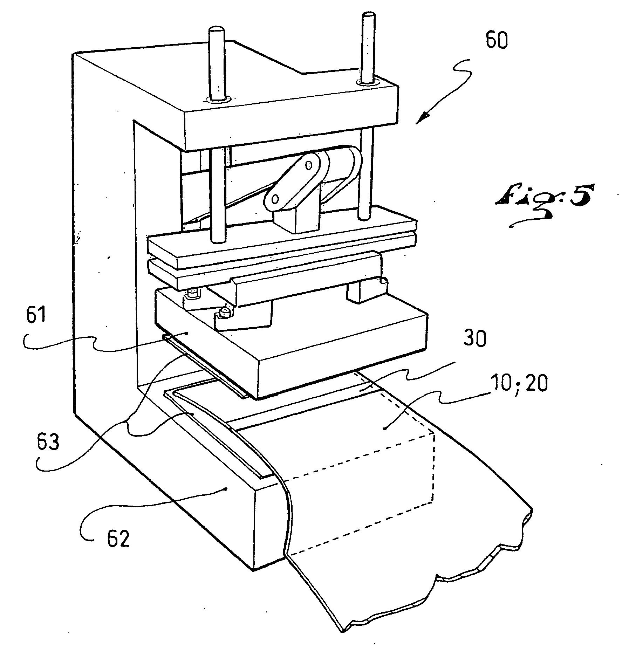

Les figures 1 à 6 illustrent les différentes phases du procédé d'assemblage selon l'invention de deux panneaux laminés 10, 20.

Chaque panneau laminé 10, 20 est constitué d'au moins deux couches respectivement 11, 12 ; 21, 22.

Selon un premier exemple les panneaux laminés 10,20 sont des panneaux de tissus traités déperlants (DWR) c'est-à-dire revêtus d'une enduction à base de fluor, teflon ou autre, chaque couche 11, 21 est donc une couche de tissu, soit tissé, soit en maille jersey, en un matériau synthétique tel que PA, PE, polypropylène, avec ou sans fibres élastiques telles que connues sous la dénomination commerciale lycra®, etc.

Il peut également s'agir d'un tissu muni d'une membrane respiro-étanche (PTFE, PU) connu sous l'appellation "three ply", trois couches, décrits ci-avant.

Chaque couche 12, 22 représente le traitement déperlant qui peut être par exemple du type connu sous l'une des dénominations commerciales Scotchguard®, Teflon® ou autre.

D'autres traitements déperlant et/ou water résistant peuvent également être prévus. Dans le cas décrit, le traitement DWR est appliqué sur la face externe du tissu, il pourrait également être appliqué sur la face interne.

Dans une première étape du procédé d'assemblage selon l'invention, les deux panneaux 10, 20 sont superposés de façon que leurs faces internes 11a, 21a soient en vis-à-vis c'est-à-dire en contact l'une avec l'autre.

Ces deux panneaux 10, 20 sont ensuite soudés l'un à l'autre à l'aide d'une machine de soudage ultrason (non représentée sur le dessin), à l'aide d'un outil de soudage 41 le long d'une ligne d'assemblage 40.

Les machines de soudure à ultrason sont bien connues par exemple par le US 3 817 802, et la machine utilisée ne sera donc pas décrite en détail.

Dans le principe de soudage par ultrason des vibrations à une fréquence de l'ordre de 20 à 30 KHz sont appliquées à l'outil de soudage. Les vibrations échauffent les deux couches de matériaux en contact et provoquent leur soudure mutuelle par fusion.

Bien entendu d'autres modes de soudure peuvent être envisagés et notamment les modes de soudure thermique ou à haute fréquence.

On peut également prévoir un assemblage de type plus traditionnel par exemple par couture.

Quasi simultanément à l'opération de soudure, l'excès de matière 10a, 20a situé de l'autre côté de la ligne d'assemblage 40, est enlevé à l'aide d'un outil 42 de type couteau approprié, de façon à ne laisser que la soudure ou ligne d'assemblage 40 apparente sur le bord des panneaux 10, 20.

La ligne de soudure ou d'assemblage 40 a alors une épaisseur e maximale de l'ordre de 1 mm. Ce principe d'enlever l'excès de matière 10a, 20a peut également être appliqué avec les autres modes d'assemblage, par exemple par couture, envisageables.

Après un temps de refroidissement à l'air ou autre, de l'ordre d'une dizaine de secondes, les deux panneaux 10, 20, qui sont soudés ensemble, sont mis à plat de façon que leurs faces externes respectivement 11b, 22b soient tournées vers le haut. Un ruban d'étanchéité et de renfort 30 est alors appliqué, par collage sur la partie apparente de la ligne d'assemblage 40.

Dans l'exemple représenté le ruban d'étanchéité 30 est constitué de 4 couches à savoir :
- une première couche 31 de colle d'étanchéité telle que vendue sous la dénomination commerciale Ardmel TO41, cette colle est extrêmement fluide et fusible à chaud de façon à bien remplir les interstices entre les fibres constituant les tissus 11, 21 et à garantir une bonne étanchéité. Une telle colle a un toucher "collant" à froid.
- une seconde couche 32 de matériau polymère thermofusible ayant une grande résistance mécanique et ayant notamment une grande tenue à la traction, et une grande résistance au lavage et à l'hydrolyse.
- une troisième couche 33, qui est une couche d'enduction ou une membrane à base de PU, PE polyamide, etc, et qui est destinée à éviter le fluage de la couche 32 c'est à dire de la couche de la colle vers l'extérieur, c'est-à-dire vers la 4^{ème} couche.
- une quatrième couche 34, qui est une couche de matériau textile ou autre destinée à fournir une résistance mécanique longitudinale et transversale et un effet décoratif. Cette quatrième couche peut être revêtue d'une impression en couleur ou en relief pour un effet décoratif.

Les deux couches de colle 31, 32 peuvent être combinées en une seule couche

Selon un mode de réalisation de l'invention, cette couche 34 est dans le même matériau laminé que celui constituant les panneaux 10, 20. Dans ce cas elle est également munie du même traitement ou revêtement extérieur. Dans le cas où la couche 11, 21 de base est un laminé c'est-à-dire un complexe avec une membrane respiroétanche ou similaire, seule la couche externe de ce laminé, c'est-à-dire dépourvue de membrane mais avec ou sans traitement déperlant sera utilisée pour former la quatrième couche 34 de façon à limiter les épaisseurs.

Cette couche 34 peut être dans la même couleur ou dans une couleur différente de façon à contraster avec celle(s) des panneaux 10, 20.

Dans l'exemple décrit, la troisième couche 33 sert à empêcher le fluage de la colle vers la couche externe de décoration 34, pendant les différentes étapes du procédé. On peut également envisager un ruban d'étanchéité, n'ayant que les deux premières couches 31, 32 et donc dépourvu de couche de décoration. Dans un tel cas la troisième couche n'est pas nécessaire, mais la couche de colle 32 est munie d'un grillage ou similaire noyé dedans qui lui confère la résistance mécanique et la finition nécessaires.

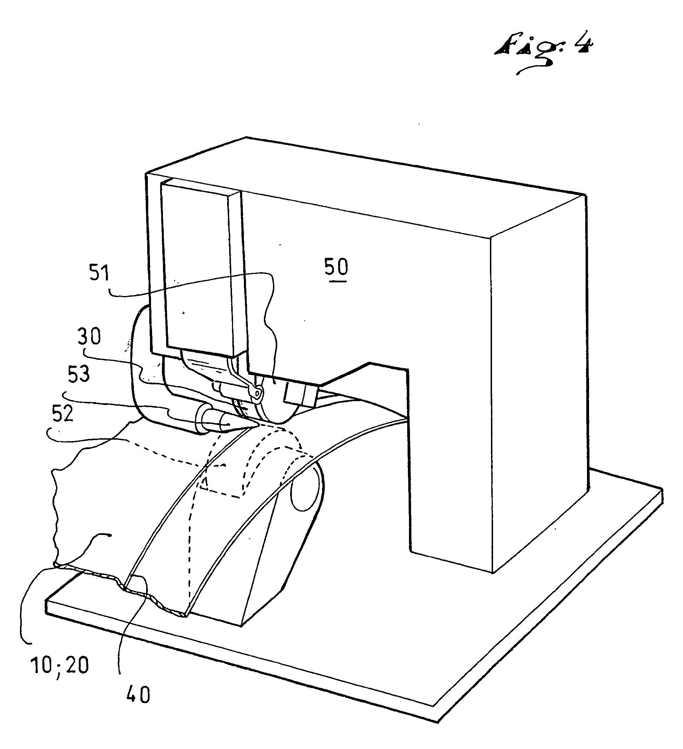

Le collage du ruban d'étanchéité 30 est effectué selon 3 étapes différentes illustrées à l'aide des figures 4 à 6.

Dans une première étape illustrée à la figure 4, le ruban 30 est appliqué à l'aide d'une presse 50 ou machine à poser des rubans d'étanchéité telle que vendue sous les dénominations commerciales Pfaff ou Ardmel de type connu, munie de rouleaux 51, 52 entraînant le ruban d'étanchéité 30 et les panneaux laminés 10, 20 assemblés, le matériau adhésif du ruban 30 étant au préalable ramolli par de l'air chaud provenant d'une buse 53.

La température de l'air chaud est de 130°C en sortie de buse.et la pression d'assemblage est de 5 bars.

Une telle opération permet un assemblage du ruban 30, satisfaisant pour la tenue du ruban et de la ligne d'assemblage 40 même si l'assemblage est effectué par soudage, mais insuffisant pour garantir une bonne étanchéité dudit assemblage et donc du vêtement et/ou sac dans son ensemble.

L'assemblage étanche proprement dit est effectué à l'aide de deux étapes suivantes.

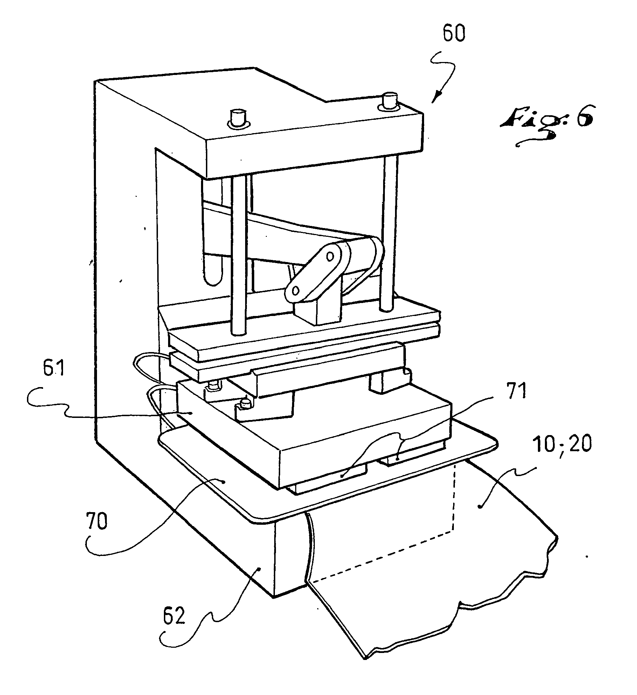

Dans la seconde étape montrée à la figure 6, les deux panneaux assemblés munis du ruban d'étanchéité 30 sont pressés à chaud entre les deux plateaux 61, 62 d'une presse. Le plateau supérieur 61 est chauffant et porté à une température entre 130et 150°C qui dépend de la nature du polymère constituant la première couche 31 du ruban d'étanchéité et de la nature des textiles à assembler, des feuilles de papier siliconé 63 peuvent être interposées entre chaque plateau chauffant et les panneaux 10, 20 pour éviter le fluage de la colle sur ces dits plateaux. Selon le mode de réalisation décrit, cette température est de l'ordre de 150°C, la pression de 2 bars et la durée d'application est d'environ 25 secondes. Cette phase de pressage à chaud permet de garantir un bon fluage de la couche 31 jusqu'à pénétration dans tous les interstices entre les fibres.

A l'issue de cette phase de pressage à chaud, le plateau supérieur 61 est relevé, et abaissé de nouveau après interposition d'une plaque métallique froide 70 munie de plots isolants 71 pour éviter toute transmission de chaleur du plateau supérieur à ladite plaque froide.

Cette plaque froide 70 peut être simplement à température ambiante ou être refroidie à une température de l'ordre de 0 à 10°C selon le type de colle.

La plaque froide 70 est maintenue sous une pression de 2 bars pendant 5 à 10 secondes. La presse peut également être une presse comportant deux plateaux pivotants pour le pressage à chaud ou à froid. Durant cette dernière phase on réalise un pressage à froid, qui bloque tout retrait de la première couche de collage 31 et garantit donc une parfaite répartition de la colle à l'intérieur des interstices du tissu et par conséquent une bonne étanchéité.

Cette phase est donc particulièrement importante pour l'étanchéité de l'assemblage final.

A l'aide du procédé d'assemblage et d'étanchéité décrit ci-avant, on obtient un assemblage étanche à 2m (200mm) ou 200mbar avec une montée en pression de 60mb/mm selon la méthode d'essai dynamique de la norme ISO 811 et selon la méthode d'essai dynamique de la norme AATCC 127.

Bien entendu la présente invention n'est pas limitée aux seuls exemples de réalisation décrits ci-avant et elle s'applique notamment aussi aux sacs en matériau souples et aux textiles étanches et/ou résistants à l'eau que ceux-ci soient des laminés comme décrit ou non.

Elle peut également être appliquée à tout type d'assemblage de produits réalisés en des matériaux textiles revêtus d'une enduction étanche et/ou résistants à l'eau.

Elle peut également être appliquée à l'assemblage de panneaux laminés extensibles, dans ce cas le ruban d'étanchéité 30 possède un taux d'élongation inférieur à celui de la ligne d'assemblage 40, surtout lorsque celle-ci est réalisée par soudure.

## Revendications

1. Procédé d'assemblage de deux panneaux comprenant les étapes consistant à :
- fournir au moins deux panneaux laminés (10, 20), chaque panneau laminé comprenant au moins une couche de matériau textile (11, 21)et une couche de protection (12, 22) résistante à l'eau fixée sur le matériau textile,
- à assembler les deux panneaux (10, 20) selon une ligne d'assemblage déterminée,
- à mettre à plat les deux panneaux laminés (10, 20),
- à pré positionner par collage un ruban d'étanchéité (30) muni d'un adhésif (31, 32) sur la ligne d'assemblage (40),
- à soumettre la ligne d'assemblage (40) à une température θ1 supérieure à la température de fusion de l'adhésif, sous une pression P déterminée pendant une durée T déterminée, de façon à faire fluer au moins une partie de l'adhésif dans les interstices des fibres du matériau textile, et **caractérisé par** l'étape consistant
- à soumettre, à l'issue de la durée T, la ligne d'assemblage (40) à un refroidissement accéléré par pressage à froid au moyen d'une plaque froide de façon à figer et solidifier l'adhésif.

2. Procédé selon la revendication 1, **caractérisé en ce que** l'assemblage des deux panneaux (10, 20) est effectué par soudure.

3. Procédé selon la revendication 2, **caractérisé en ce que** l'assemblage des deux panneaux (10, 20) est effectué par couture.

4. Procédé selon l'une des revendications 2 ou 3, **caractérisé en ce que** l'excès de matière au-delà de la ligne d'assemblage (40) est coupée avant l'adjonction du ruban d'étanchéité.

5. Procédé selon les revendications 1 à 4, **caractérisé en ce que** l'adhésif thermofusible comporte une première couche (31) de polymère thermofusible imprégnant les interstices entre les fibres du matériau textile dans la couche extérieure de la ligne d'assemblage, une seconde couche (32) de polymère thermofusible ayant des caractéristiques de tenue mécanique,

6. Procédé selon la revendication 5, **caractérisé en ce que** la seconde couche (32) de polymère thermofusible a des caractéristiques de résistance à la traction et de résistance au lavage et à l'hydrolyse.

7. Procédé selon l'une des revendications 5 ou 6, **caractérisé en ce que** la seconde couche (32) de polymère est en PU.

8. Procédé selon l'une des revendications 5 à 7, **caractérisé en ce que** le ruban d'étanchéité (30) comporte également une couche de matériau textile (34).

9. Procédé selon la revendication 8, **caractérisé en ce que** le ruban d'étanchéité (30) comporte une couche d'enduction ou membrane (33) interposée entre la couche d'adhésif et la couche de matériau textile (34).

10. Procédé selon la revendication 9, **caractérisé en ce que** la couche de matériau textile (34) est la même que celle constituant au moins la face externe de chacun des laminés (10, 20).

11. Procédé selon l'une des revendications 1 à 10, **caractérisé en ce que** le ruban d'étanchéité (30) est appliqué sur la face externe des deux panneaux laminés (10, 20).

12. Procédé selon l'une des revendications 1 à 10, **caractérisé en ce que** le ruban d'étanchéité (30) est appliqué sur la face interne des panneaux laminés (10, 20).

## Claims

1. Method of assembling two panels comprising the following steps:
- providing at least two laminated panels (10, 20), each laminated panel comprising at least one layer of fabric material (11, 21) and one water-resistant protective layer (12, 22) fixed to the fabric material;
- assembling the two panels (10, 20) along a predetermined joining line;
- flattening the two laminated panels (10, 20);
- pre-positioning on the joining line (40), by gluing, a sealing strip (30) provided with an adhesive (31, 32);
- subjecting the joining line (40) to a temperature θ1 greater than the melting temperature of the adhesive, under a predetermined pressure P for a predetermined duration T, so that at least a portion of the adhesive creeps into interstices of the fibers of the fabric material;
and **characterized by** the step comprising subjecting the joining line (40), at the end of the duration T, to an accelerated cooling by cold pressing using a cold plate, so as to congeal and solidify the adhesive.

2. Method according to claim 1, **characterized in that** the two panels (10, 20) are assembled by being welded together.

3. Method according to claim 2, **characterized in that** the two panels (10, 20) are assembled by being stitched together.

4. Method according to one of claims 2 or 3, **characterized in that** the excess of material beyond the joining line (40) is cut before the sealing strip is added.

5. Method according to claims 1 to 4, **characterized in that** the heat meltable adhesive comprises a first layer (31) of a heat meltable polymer impregnating the interstices between the fibers of the fabric in the outer layer of the joining line; and a second layer (32) of a heat meltable polymer having mechanical strength characteristics.

6. Method according to claim 5, **characterized in that** the second layer (32) of heat meltable polymer has characteristics of tensile strength and resistance to washes and hydrolysis.

7. Method according to one of claims 5 or 6, **characterized in that** the second layer (32) of polymer is made ofPU.

8. Method according to one of claims 5 to 7, **characterized in that** the sealing strip (30) also comprises a layer of fabric material (34).

9. Method according to claim 8, **characterized in that** the sealing strip (30) comprises a coating layer or membrane (33) inserted between the adhesive layer and the layer of fabric material (34).

10. Method according to claim 9, **characterized in that** the layer of fabric material (34) is the same as the layer constituting at least the outer surface of each of the laminates (10, 20).

11. Method according to one of claims 1 to 10, **characterized in that** the sealing strip (30) is applied to the outer surface of the two laminated panels (10, 20).

12. Method according to one of claims I to 10, **characterized in that** the sealing strip (30) is applied to the inner surface of the two laminated panels (10, 20).

## Patentansprüche

1. Verfahren zum Zusammensetzen zweier Platten, die folgenden Schritte umfassend, welche bestehen aus:
- Bereitstellen von zumindest zwei laminierten Platten (10, 20), wobei jede laminierte Platte zumindest eine Schicht eines textilen Materials (11, 21) und eine Schutzschicht (12, 22), die wasserbeständig ist und auf dem textilen Material befestigt ist, umfasst,
- Zusammensetzen der zwei Platten (10, 20) entlang einer vorbestimmten Montagelinie,
- flach Hinlegen der zwei laminierten Platten (10, 20),
- flaches Positionieren durch Kleben eines Dichtbands (30), welches mit einem Klebstoff (31, 32) auf der Montagelinie (40) versehen ist,
- Aussetzen der Montagelinie (40) einer Temperatur Q1, welche höher als die Schmelztemperatur des Klebstoffs ist, und einem Druck P, welcher während einer bestimmten Zeitdauer T in der Weise bestimmt ist, um zumindest einen Teil des Klebstoffs in die Zwischenräume der Fasern des textilen Materials fließen zu lassen, und durch den Schritt **gekennzeichnet**, bestehend aus
- Aussetzen am Ende der Zeitdauer T der Montagelinie (40) einer beschleunigten Abkühlung durch Kaltpressung mittels einer kalten Platte in der Weise, um den Klebstoff zu erstarren und zu verfestigen.

2. Verfahren nach Anspruch 1, **dadurch gekennzeichnet, dass** die Montage der zwei Platten (10, 20) durch Schweißen ausgeführt wird.

3. Verfahren nach Anspruch 2, **dadurch gekennzeichnet, dass** die Montage der zwei Platten (10, 20) durch Nähen ausgeführt wird.

4. Verfahren nach einem der Ansprüche 2 oder 3, **dadurch gekennzeichnet, dass** das über die Montagelinie (40) überschüssige Material vor dem Hinzufügen des Dichtbands abgeschnitten wird.

5. Verfahren nach den Ansprüchen 1 bis 4, **dadurch gekennzeichnet, dass** der hitzeschmelzbare Klebstoff eine erste Schicht (31) aus hitzeschmelzbarem Polymer umfasst, welcher die Zwischenräume zwischen den Fasern des textilen Materials in der äußeren Schicht der Montagelinie tränkt und einer zweiten Schicht (32) aus hitzeschmelzbarem Polymer, welches mechanische Halteigenschaften aufweist.

6. Verfahren nach Anspruch 5, **dadurch gekennzeichnet, dass** die zweite Schicht (32) des hitzesohmelzbaren Polymers Zugwiderstands-, Waschbeständigkeits- und Flydrolyse-Beständigkeitseigenschaften aufweist.

7. Verfahren nach einem der Ansprüche 5 oder 6, **dadurch gekennzeichnet, dass** die zweite Polymerschicht (32) aus PU besteht.

8. Verfahren nach einem der Ansprüche 5 bis 7, **dadurch gekennzeichnet, dass** das Dichtband (30) auch eine Schicht aus textilem Material (34) umfasst.

9. Verfahren nach Anspruch 8, **dadurch gekennzeichnet, dass** das Dichtband (30) eine Streichschicht oder Membran (33) umfasst, welche zwischen die Klebeschicht und die textile Materialschicht (34) zwischengelagert ist.

10. Verfahren nach Anspruch 9, **dadurch gekennzeichnet, dass** die Schicht aus textilem Material (34) dieselbe ist, wie jene, die zumindest die äußere Seite von jedem der Laminate (10, 20) darstellt.

11. Verfahren nach einem der Ansprüche 1 bis 10, **dadurch gekennzeichnet, dass** das Dichtband (30) auf die äußere Seite der zwei laminierten Platten (10, 20) aufgebracht wird.

12. Verfahren nach einem der Ansprüche 1 bis 10, **dadurch gekennzeichnet, dass** das Dichtband (30) auf die innere Seite der laminierten Platten (70, 20) aufgebracht wird.
